# EUROPEAN PATENT SPECIFICATION

(11) **EP 3 342 215 B1**
(45) Date of publication and mention of the grant of the patent: **09.01.2019**
(21) Application number: 16760289.5
(22) Date of filing: 25.08.2016
(51) Int. Cl.: H04W 52/02

(54) **POWER SAVE MECHANISM IN A WLAN NETWORK WITH LARGE NUMBER OF STATIONS**
ENERGIESPARMECHANISMUS IN EINEM WLAN-NETZWERK MIT EINER GROSSEN ANZAHL AN STATIONEN
MÉCANISME D'ÉCONOMIE D'ÉNERGIE DANS UN RÉSEAU WLAN AYANT UN GRAND NOMBRE DE STATIONS

(30) Priority: 25.08.2015 US 201562209473 P; 24.08.2016 US 201615246423
(43) Date of publication of application: 04.07.2018
(73) Proprietor: QUALCOMM Incorporated, San Diego, CA 92121-1714 (US)
(72) Inventor: JIA, Zhanfeng, San Diego, California 92121-1714 (US); RAISSINIA, Alireza, San Diego, California 92121-1714 (US); ASTERJADHI, Alfred, San Diego, California 92121-1714 (US); CHO, James, Simon, San Diego, California 92121-1714 (US); HOMCHAUDHURI, Sandip, San Diego, California 92121-1714 (US); KUMAR, Sumeet, San Diego, California 92121-1714 (US); MERLIN, Simone, San Diego, California 92121-1714 (US); ZHANG, Ning, San Diego, California 92121-1714 (US); RANGANATH, Ashok, San Diego, California 92121-1714 (US); O'DONNELL, Ian, San Diego, California 92121-1714 (US); YOUNG, Jason, San Diego, California 92121-1714 (US); SAMPATHKUMAR, BadriSrinivasan, San Diego, California 92121-1714 (US)
(74) Representative: Wegner, Hans
(86) International application number: PCT/US2016/048528
(87) International publication number: WO 2017/035293

(56) References cited:
- US-A1- 2014 112 225
- US-A1- 2014 211 678
- MINYOUNG PARK (INTEL CORP): "Proposed TGah Draft Amendment ; 11-13-0500-00-00ah-proposed-tgah-draft-ame ndment", IEEE SA MENTOR; 11-13-0500-00-00AH-PROPOSED-TGAH-DRAFT-AME NDMENT, IEEE-SA MENTOR, PISCATAWAY, NJ USA, vol. 802.11ah, 10 May 2013 (2013-05-10), pages 1-330, XP068054010, [retrieved on 2013-05-10]
- AMIN JAFARIAN (QUALCOMM INC): "LB200-MAC-Resolution-Clause-9.41.5 ; 11-13-1515-02-00ah-lb200-mac-resolution-cl ause-9-41-5", IEEE DRAFT; 11-13-1515-02-00AH-LB200-MAC-RESOLUTION-CL AUSE-9-41-5, IEEE-SA MENTOR, PISCATAWAY, NJ USA, vol. 802.11ah, no. 2, 12 December 2013 (2013-12-12), pages 1-11, XP068063562, [retrieved on 2013-12-12]

## Description

### BACKGROUND

### FIELD OF THE DISCLOSURE

The present disclosure, for example, relates to wireless communication systems, and more particularly to power save mechanisms for WLAN.

### DESCRIPTION OF RELATED ART

Wireless communications systems are widely deployed to provide various types of communication content such as voice, video, packet data, messaging, broadcast, and so on. These systems may be multiple-access systems capable of supporting communication with multiple users by sharing the available system resources (*e.g.,* time, frequency, and power). A wireless network, for example a Wireless Local Area Network (WLAN), such as a Wi-Fi network (IEEE 802.11) may include an access point (AP) that may communicate with one or more stations (STAs) or mobile devices. The AP may be coupled to a network, such as the Internet, and enable a mobile device to communicate via the network (and/or communicate with other devices coupled to the access point).

In WLAN environments where an AP serves many STAs, an aggregate throughput level may not be maintained with respect to the number of STAs. Some WLANs use an initiated scheduled access where an AP assigns target wakeup time (TWT) groups for a subset of the STAs. Which STAs are awake to communicate with the AP rotates based on the assigned TWT group. However, using this system, an aggregated throughput level typically drops moderately with respect to the number of STAs. Further, such assignments cause a lot of overhead and require new messages or signaling.

A. Jafarian et al.: "IEEE P802.11 Wireless LANs - Comment Resolution for Subclause 9.41.5", IEEE 802.11-13/1515r2, December 11, 2013 discloses resolutions for comments in clause 9.41.5 of TGah Draft 1.0 with the following CIDs: 1234, 1235, 1236, 1514, 1515, 1650, 1651, 1875, 1876, 1877, 1878, 1880, 1881, 1882, 1883, 2145, 2146, 2221, 2226, 2227, 2228, 2753.

US 2014/0211678 A1 discloses methods and apparatuses for wireless communications. In one aspect, an apparatus for wireless communications includes a receiver configured to wirelessly receive a message comprising a time for the apparatus to wake up and instructions to execute an action in response to receiving a paging frame from a wireless communication device. The receiver is further configured to receive the paging frame from the wireless communication device. The apparatus further includes a processor configured to execute the action in response to receiving the paging frame. In one implementation, receiving the paging frame comprises comparing an address of the paging frame with an address of the apparatus. The action may include one or more of sending a power save poll frame, waiting for packet reception, receiving the beacon, and receiving the delivery traffic indication message beacon.

US 2014/0112225 A1 discloses systems, methods, and devices for wireless communications. In one aspect, an apparatus for wireless communications includes a transceiver configured to wirelessly transmit and receive packets. The apparatus further includes a wake up circuit configured to wirelessly receive packets. The apparatus is further configured to detect reception of a wake up signal via the receiver and execute a command based on the wake up signal. In another aspect, an apparatus is disclosed, which generates and transmits wake up signals.

### SUMMARY

Techniques and systems described herein employ power save mechanisms for WLANs having large numbers of STAs. The AP maintains an aggregated throughput at a stable level with respect to the number of stations which the AP is serving. The AP provides a "no service" schedule to the STAs, such that a STA can enter a deep sleep state for a duration of the "no service" time period every time the STA gets serviced by the AP. These "no service" time periods may be aligned with the TWT slots. After a "no service" period expires, the STA may wake up and listen at the TWT slot boundaries and can enter a light sleep state for the rest of the TWT slot if it did not get serviced in the TWT slot.

A method of wireless communication is described. The method may include providing an indication of a sleep duration for transmission to a wireless node, communicating with the wireless node during a TWT, wherein the communication comprises at least one of providing data for transmission to the wireless node or obtaining data received from the wireless node, and refraining from providing data for transmission to the wireless node during at least the indicated sleep duration based at least in part on timing of the communication.

An apparatus for wireless communication is described. The apparatus may include means for providing an indication of a sleep duration for transmission to a wireless node, means for communicating with the wireless node during a TWT, wherein the communication comprises at least one of providing data to the wireless node for transmission or obtaining data received from the wireless node, and means for refraining from providing data for transmission to the wireless node during at least the indicated sleep duration based at least in part on timing of the communication.

Another apparatus for wireless communication is described. The apparatus may include an interface configured to provide an indication of a sleep duration for transmission to a wireless node. The apparatus may include a mechanism configured to communicate with the wireless node during a TWT, wherein the communication comprises at least one of providing data for transmission to the wireless node or obtaining data receiving from the wireless node, and refrain from providing data for transmission to the wireless node during at least the indicated sleep duration based at least in part on timing of the communication.

Another apparatus for wireless communication is described. The apparatus may include a transceiver configured to transmit an indication of a sleep duration to a wireless node and a mechanism configured to: communicate with the wireless node during a TWT, wherein the communication comprises at least one of transmitting data to the wireless node or receiving date from the wireless node, and refrain from transmitting to the wireless node during at least the indicated sleep duration based at least in part on timing of the communication.

A computer readable medium for wireless communication is described. The computer-readable medium may include instructions operable to cause a processor to provide an indication of a sleep duration for transmission to a wireless node, communicate with the wireless node during a TWT, wherein the communication comprises at least one of providing data for transmission to the wireless node or obtaining data received from the wireless node, and refrain from providing data for transmission to the wireless node during at least the indicated sleep duration based at least in part on timing of the communication.

In some examples of the method, apparatus, and computer-readable medium described above, providing the indication of the sleep duration for transmission to the wireless node further comprises generating a TWT setup request frame having the indication of sleep duration therein, and providing the TWT setup request frame for transmission .

In some examples of the method, apparatus, and computer-readable medium described above, providing the indication of the sleep duration for transmission to the wireless node further comprises generating a TWT signal frame during a time slot of the TWT, wherein the TWT signal frame comprises a service list that identifies at least one wireless node to be serviced during at least one of the time slot of the TWT or the sleep duration.

Some examples of the method, apparatus, and computer-readable medium described above may further include processes, features, means, or instructions for generating a beacon frame having the indication of the sleep duration therein, wherein providing the indication of the sleep duration for transmission to the wireless node further comprises providing the beacon frame for a broadcasting transmission.

Some examples of the method, apparatus, and computer-readable medium described above may further include processes, features, means, or instructions for determining a no service period for the wireless node, wherein the indication of the sleep duration identifies the no service period, the no service period selected based at least in part on a network congestion.

Some examples of the method, apparatus, and computer-readable medium described above may further include processes, features, means, or instructions for selecting an allocation of the TWT for a set of wireless nodes including the wireless node to align the no service period with the allocation of the TWT.

Some examples of the method, apparatus, and computer-readable medium described above may further include processes, features, means, or instructions for determining the sleep duration based at least in part on an aggregate throughput level that is associated with a number of wireless nodes including the wireless node.

Some examples of the method, apparatus, and computer-readable medium described above may further include processes, features, means, or instructions for updating the sleep duration and providing an indication of the updated sleep duration for transmission to the wireless node during a second TWT occurring temporally after the TWT.

A method of wireless communication is described. The method may include obtaining an indication of a sleep duration received from a wireless node, communicating with the wireless node during a time slot of a TWT, wherein the communication comprises at least one of obtaining data received from the wireless node or providing data for transmission to the wireless node, and entering a sleep mode for the indicated sleep duration based at least in part on timing of the communication with the wireless node during the time slot of the TWT.

An apparatus for wireless communication is described. The apparatus may include means for obtaining an indication of a sleep duration received from a wireless node, means for communicating with the wireless node during a time slot of a TWT, wherein the communication comprises at least one of obtaining data received from the wireless node or providing data for transmission to the wireless node, and means for entering a sleep mode for the indicated sleep duration based at least in part on timing of the communication with the wireless node during the time slot of the TWT.

Another apparatus for wireless communication is described. The apparatus may include an interface configured to obtain an indication of a sleep duration received from a wireless node. The apparatus may include a mechanism configured to communicate with the wireless node during a time slot of a TWT, wherein the communication comprises at least one of obtaining data received from the wireless node or providing data for transmission to the wireless node, and enter a sleep mode for the indicated sleep duration based at least in part on timing of the communication with the wireless node during the time slot of the TWT.

A computer readable medium for wireless communication is described. The computer-readable medium may include instructions operable to cause a processor to obtain an indication of a sleep duration received from a wireless node, communicate with the wireless node during a time slot of a TWT, wherein the communication comprises at least one of obtaining data received from the wireless node or providing data for transmission to the wireless node, and enter a sleep mode for the indicated sleep duration based at least in part on timing of the communication with the wireless node during the time slot of the TWT.

In some examples of the method, apparatus, and computer-readable medium described above, obtaining the indication of the sleep duration received from the wireless node further comprises: obtaining a beacon frame received from the wireless node. Some examples of the method, apparatus, and computer-readable medium described above may further include processes, features, means, or instructions for determining the indication of the sleep duration from the beacon frame.

In some examples of the method, apparatus, and computer-readable medium described above, obtaining the indication of the sleep duration further received from the wireless node comprises: obtaining a TWT setup request frame received from the wireless node. Some examples of the method, apparatus, and computer-readable medium described above may further include processes, features, means, or instructions for determining the sleep duration from the TWT setup request frame.

Some examples of the method, apparatus, and computer-readable medium described above may further include processes, features, means, or instructions for waking up from the sleep mode at a beginning of the time slot of the TWT.

In some examples of the method, apparatus, and computer-readable medium described above, obtaining the indication of the sleep duration received from the wireless node further comprises: obtaining during the time slot of the TWT, a TWT signal frame received from the wireless node that includes a service list that identifies which wireless nodes may be to be serviced in at least one of the time slot of the TWT or the sleep duration.

In some examples of the method, apparatus, and computer-readable medium described above, entering the sleep mode further comprises determining that the service list does not include a wireless node for the time slot of the TWT. Some examples of the method, apparatus, and computer-readable medium described above may further include processes, features, means, or instructions for entering, by the wireless node, the sleep mode for the remainder of the time slot of the TWT.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purpose of illustration and description only, and not as a definition of the limits of the claims.

### BRIEF DESCRIPTION OF THE DRAWINGS

A further understanding of the nature and advantages of the present disclosure may be realized by reference to the following drawings. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
FIG. 1 illustrates an example of a network, such as a WLAN, that supports power save mechanisms in accordance with various aspects of the present disclosure;
FIGs. 2-4 illustrate example timing diagrams showing power modes of wireless nodes in accordance with various aspects of the present disclosure;
FIG. 5 shows a process flow that illustrate an example of a power save mechanism in accordance with various aspects of the present disclosure;
FIGs. 6A and 6B show block diagrams of examples of an AP that support power save mechanisms in a WLAN in accordance with various aspects of the present disclosure;
FIGs. 7A and 7B show block diagrams of examples of a STA that support power save mechanisms in a WLAN in accordance with various aspects of the present disclosure; and
FIGs. 8-9 show flow charts that illustrate examples of methods for power save mechanisms in a WLAN in accordance with various aspects of the present disclosure.

### DETAILED DESCRIPTION

An access point (AP) can provide a "no service" schedule to the wireless nodes (STAs) that it serves. The AP may format the sleep duration (*e.g*., the "no service" time period) in one of several ways, including in a target wakeup time (TWT) setup request frame, an Action frame, or a beacon frame. A STA then wakes up at the beginning of each defined TWT until a data exchange occurs between the STA and the AP. Once the data exchange occurs, the STA may enter a deep sleep mode for at least the "no service" time period defined by the AP. Once the "no service" time period expires, the STA resumes the pattern of waking up at the beginning of each TWT.

The following description provides examples, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in other examples.

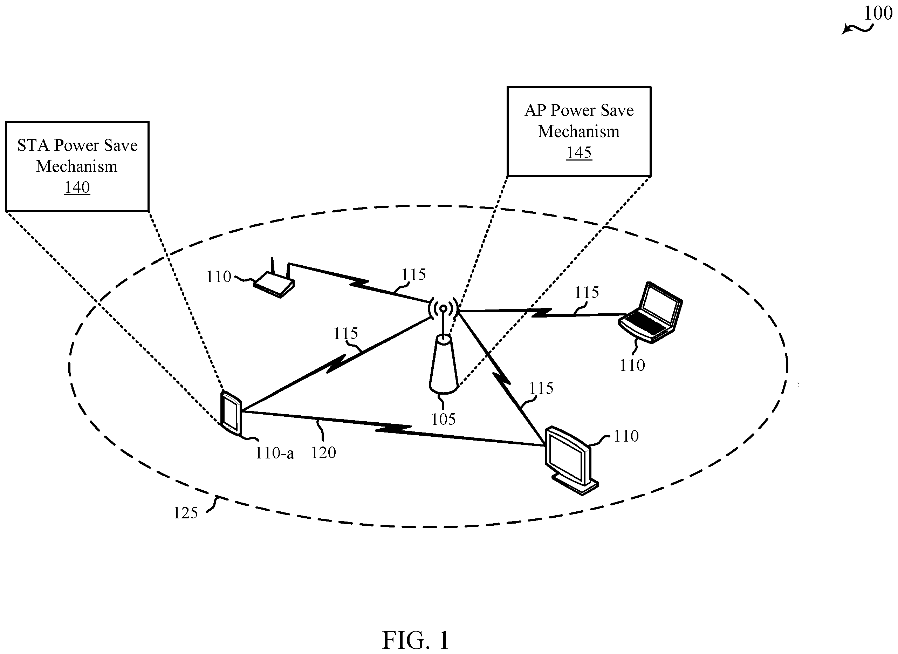

Referring first to **FIG. 1**, a block diagram illustrates an example of a WLAN 100 such as, *e.g.,* a network implementing at least one of the IEEE 802.11 family of standards. The WLAN 100 may include an AP 105 and one or more wireless devices or wireless stations 110, such as mobile stations, personal digital assistants (PDAs), other handheld devices, netbooks, notebook computers, tablet computers, laptops, display devices (*e.g.,* TVs, computer monitors, *etc*.), printers, *etc.* While only one AP 105 is illustrated, the WLAN 100 may have multiple APs 105. Each of the wireless stations 110, which may also be referred to as mobile stations (MSs), mobile devices, access terminals (ATs), user equipment (UE), subscriber stations (SSs), or subscriber units, may associate and communicate with an AP 105 via a communication link 115. Each AP 105 has a geographic coverage area 125 such that wireless stations 110 within that area can typically communicate with the AP 105. The wireless stations 110 can be dispersed throughout the geographic coverage area 125. Each wireless station 110 can be stationary or mobile. In some aspects, a wireless station 110 and/or an AP 105 may be wireless nodes of WLAN 100. In some aspects, a wireless node implemented in accordance with the teachings herein may comprise an access point, such as AP 105, or an access terminal.

A wireless station 110 can be covered by more than one AP 105 and can therefore associate with one or more APs 105 at different times. A single AP 105 and an associated set of stations may be referred to as a basic service set (BSS). An extended service set (ESS) is a set of connected BSSs. A distribution system (DS) is used to connect APs 105 in an extended service set. A geographic coverage area 125 for an AP 105 may be divided into sectors making up only a portion of the coverage area. The WLAN 100 may include APs 105 of different types (*e.g.,* metropolitan area, home network, *etc*.), with varying sizes of coverage areas and overlapping coverage areas for different technologies. Other wireless devices can communicate with the AP 105.

While the wireless stations 110 may communicate with each other through the AP 105 using communication links 115, each wireless station 110 may also communicate directly with one or more other wireless stations 110 via a direct wireless link 120. Two or more wireless stations 110 may communicate via a direct wireless link 120 when both wireless stations 110 are in the AP geographic coverage area 125 or when one or neither wireless station 110 is within the AP geographic coverage area 125. Examples of direct wireless links 120 may include Wi-Fi Direct connections, connections established by using a Wi-Fi Tunneled Direct Link Setup (TDLS) link, and other P2P group connections. The wireless stations 110 in these examples may communicate according to the WLAN radio and baseband protocol including physical and MAC layers from IEEE 802.11, and its various versions including, but not limited to, 802.11b, 802.11g, 802.11a, 802.11n, 802.11ac, 802.11ad, 802.11ah, *etc.* In other implementations, other peer-to-peer connections and/or ad hoc networks may be implemented within WLAN 100.

One or more of the wireless station 110, such as wireless station 110-a, includes a STA power save mechanism 140. The STA power save mechanism 140 may also be implemented in or as a processing system of wireless station 110. The STA power save mechanism 140 may also be referred to simply as a mechanism, in some examples. The STA power save mechanism 140 implements at least some of the power saving features described herein. For example, the wireless station 110-a receives an indication of a sleep duration from the AP 105, which in this example may also be referred to as a wireless node. The STA power save mechanism 140 causes the wireless station 110-a to communicate with the AP during a TWT slot, e.g., a predefined TWT slot. The communication is a data exchange that includes either or both of receiving data from the AP 105 and transmitting data to the AP 105. The STA power save mechanism 140 causes the wireless station 110-a to enter a sleep mode for the indicated sleep duration based at least in part on timing of the communication with the AP during the TWT slot.

The AP 105 includes AP power save mechanism 145. The AP power save mechanism 145 may also be implemented in or as a processing system of AP 105. The AP power save mechanism 145 may also be referred to simply as a mechanism, in some examples. The AP power save mechanism 145 implements some of the power save techniques described herein. The AP power save mechanism 145 transmits an indication of a sleep duration to a wireless station, such as the wireless station 110-a. The AP power save mechanism 145 communicates with the wireless station 110-a during a predefined TWT. Communicating with the wireless station 110-a includes a data exchange of one or both of transmitting data to the wireless station and receiving data from the wireless station 110-a. The AP power save mechanism 145 refrains from transmitting to the wireless station 110-a for at least the indicated sleep duration based at least in part on timing of the data exchange.

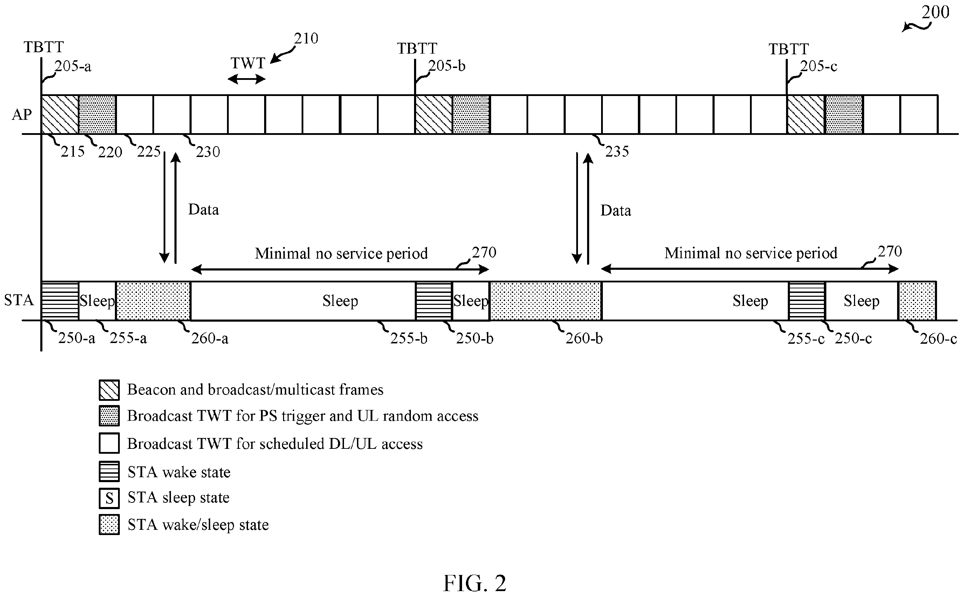

**FIG. 2** illustrates a timing diagram 200 showing power modes of a wireless station in accordance with various aspects of the present disclosure. The timing diagram 200 shows time frames for an AP and a STA, such as an AP 105 and a wireless station 110 of FIG. 1, respectively. In some examples, the STA power save mechanism 140 and/or the AP power save mechanism 145 of wireless station 110 and AP 105, respectively, may be configured to support one or more aspects of timing diagram 200. The AP may support tens or hundreds of wireless stations. The AP and STA support TWT based scheduling and in some examples either or both of the AP and STA may be a wireless node.

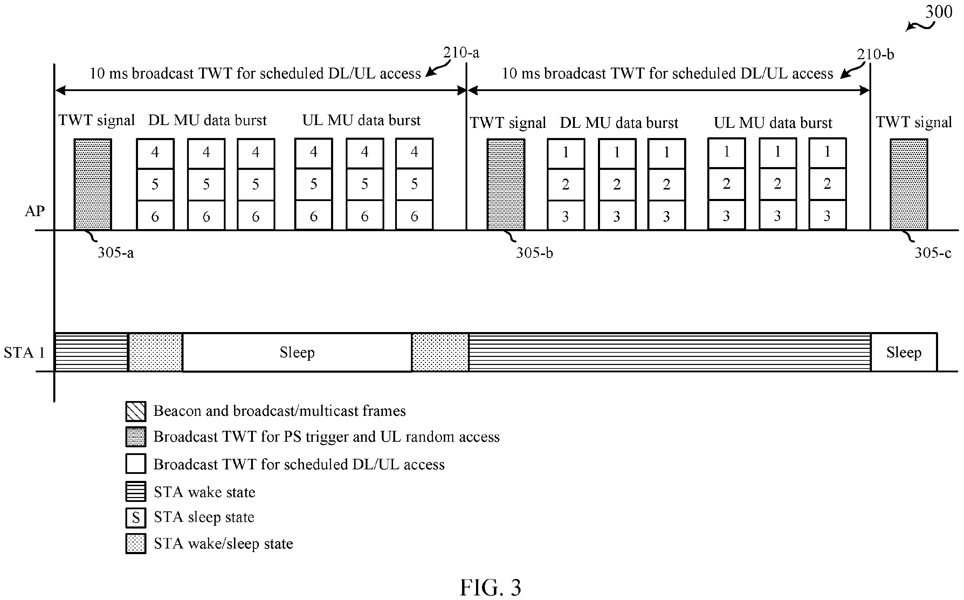

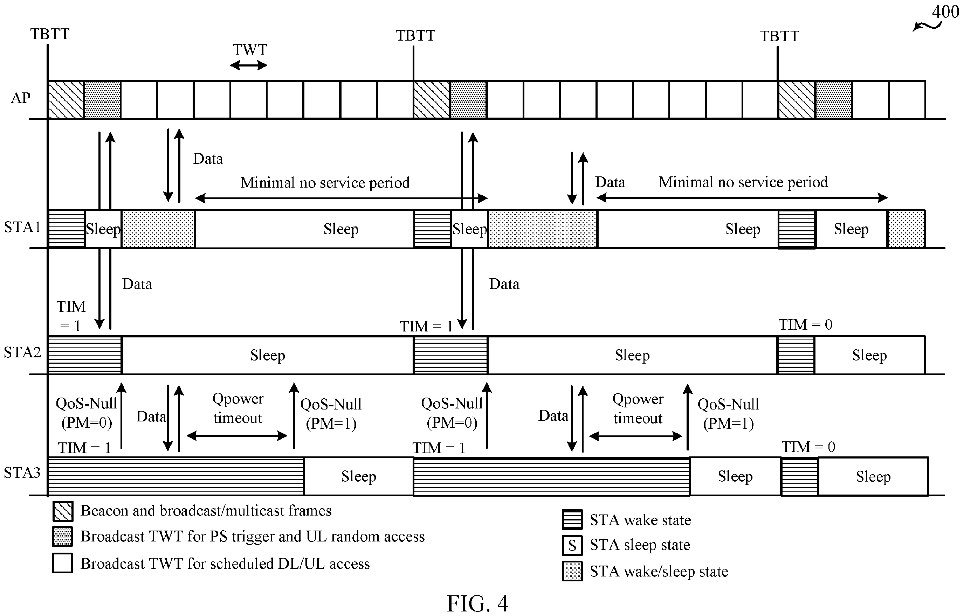

Three beacon intervals 205-a, 205-b, and 205-c are illustrated in FIG. 2. Each beacon interval 205 begins with a target beacon transmit time (TBTT). The beacon intervals 205 are broken into a number of TWTs 210. In the example shown in FIG. 2 (as well as FIGs. 3 and 4), each beacon interval 205 is broken up into ten TWTs 210. Each TWT 210 may be at least five to ten milliseconds (ms) long, for example. The duration of the TWTs 210 may be selected in order to get a specific number of TWTs 210 per beacon interval 205. Other numbers and durations of TWTs 210 are possible in other examples.

The AP provides STAs with a "no service" schedule. The AP formats the no service schedule to the STAs in one of multiple ways. In one example, the AP piggybacks an media access control (MAC) protocol data unit (MMPDU) to inform the STA that the AP is not going to serve the STA for the next sleep duration, based on the scheduling information. The sleep duration may be defined, for example, in a number of milliseconds. The AP can use a TWT setup request frame to convey the sleep duration. For example, the AP uses a "next TWT info" field to signal the sleep duration and any other timing information. Alternatively, the AP broadcasts a "no service period" to all STAs. The no service period defines a sleep duration that is common to all STAs being served by the AP. The AP may send the no service period in a transmitted beacon frame. The no service period may be any suitable duration, such as 80 milliseconds.

In some examples, the AP makes TWT allocations in advance in order to reduce the management burden on the AP. The AP can align the "no service" schedule with the TWT allocations. In such an example, the STA stays awake after the "no service" expires until receiving data from the AP.

In the example of FIG. 2, the AP specifies a no service period 270 and informs the STA of the no service period 270. The no service period 270 can be a fixed value for all STAs, based on network congestion, to reduce complexity for the AP. In other examples, the no service period 270 is different for different subsets of STAs that the AP services. The no service period 270 can also change for a particular STA for different beacon intervals 205.

The techniques described herein are enabled when the STA is not in power save mode (*e.g*., PM = 0). The STA, for example, is also not relying on a traffic indication map (TIM) bit in a beacon from the AP. The STA may align its power modes with the TWTs 210. For example, the STA may wake up at time 250-a for a first beacon frame 215 and broadcast/multicast time frame.

The STA is awake for the first beacon frame 215. Then the STA goes to sleep for time 255-a after the first beacon frame 215 and during a broadcast TWT for power save (PS) trigger and uplink random access 220. The broadcast TWT for PS trigger and uplink random access 220 is for other STAs that do not participate in TWT-based scheduling or use the no service period described herein. These other STAs enter a power-saving mode (PM=1) and rely on traffic indication map (TIM) bits in the first beacon frame 215 to determine when to wake up.

The STA wakes up at the beginning of a TWT, such as TWT 225, and waits for a transmission from the AP. That is, the STA wakes at every TWT and stays awake until a data exchange occurs between the STA and the AP. The STA may be in a wake/sleep state at time 260-a where the STA is transitioning from a sleep state to a wake state (or vice-versa in other examples). Once a communication (*e.g.*, data exchange) occurs between the STA and the AP, such as during TWT 230, the STA goes to sleep for the no service period 270. That is, the STA enters the sleep mode for time 255-b. While in the sleep mode for time 255-b, the STA can wake up to receive a beacon (at time 250-b) occurring during the no service period 270, then return to sleep for the remainder of the no service period 270. Alternatively, the STA can remain asleep during the entire no service period 270 without waking up to receive beacons. In other examples, if the data exchange does not happen, the STA may opportunistically enter the sleep mode.

The STA wakes up at time 260-b after the no service period 270. After another data exchange at TWT 235, the STA enters sleep mode again at time 255-c. Again, the STA wakes up at time 260-c after the second no service period 270. The STA can also wake up at time 250-c during the no service period 270 to receive a beacon. Alternatively, the STA can remain asleep during the entire no service period 270.

In some examples, the AP sends a service list for a TWT at the beginning of the TWT. The service list identifies which STAs are going to be served during the TWT. The service list may also update the no service period if it needs updating.

**FIG. 3** shows a timing diagram 300 that illustrates fine timing for two TWTs 210-a and 210-b. The timing diagram 300 shows time frames for an AP and a STA, such as an AP 105 and a wireless station 110 of FIG. 1, respectively. In some examples, the STA power save mechanism 140 and/or the AP power save mechanism 145 of wireless station 110 and AP 105, respectively, may be configured to support one or more aspects of timing diagram 300. The timing diagram 300 may illustrate two TWTs 210-a, 210-b of the timing diagram 200. The TWTs 210-a, 210-b are 10 ms long in this example, but may be different in other examples.

At the beginning of the TWT 210-a, the AP sends a TWT signal frame. The TWT signal frame may include one or both of a service list and a no service period. The service list defines which STAs are going to be serviced in the TWT 210-a. The AP may change the duration of the no service period for each TWT. However, the AP may use a slower loop and infrequently change the duration of the no service period.

In the example of FIG. 3, the AP sends a TWT signal frame 305-a that includes a service list that identifies STAs 4, 5, and 6 as being serviced in the TWT 210-a. The STA, STA 1, receives the TWT signal frame 305-a and determines that it is not being serviced during the TWT 210-a. Thus, STA 1 enters the sleep mode. At the beginning of the next TWT 210-b, the STA 1 wakes up. The AP sends another TWT signal frame 305-b at the beginning of the TWT 210-b. This TWT signal frame 305-b identifies STAs 1, 2, and 3 as being serviced during the TWT 210-b.

Thus, the STA 1 may have an opportunity to save power during the TWT 210-a because the STA 1 may enter the sleep mode if it is not on the service list. In some examples, the STA 1 utilizes a light sleep mode instead of a deep sleep mode. For example, the STA 1 utilizes a light sleep when the TWT 210 is short compared a wake-to-sleep and a sleep-to-wake overhead.

When an AP finishes serving the STAs that are identified in the service list, any remaining time in the TWT 210 can be used for 802.11ac/legacy access.

**FIG. 4** illustrates a timing diagram 400 showing power modes of three wireless stations in accordance with various aspects of the present disclosure. The timing diagram 400 shows time frames for an AP and three wireless stations (abbreviated as STA 1, a STA 2, and a STA 3), such as an AP 105 and a wireless station 110 of FIG. 1, respectively. In some examples, the STA power save mechanism 140 and/or the AP power save mechanism 145 of wireless station 110 and AP 105, respectively, may be configured to support one or more aspects of timing diagram 400. The AP 105 may support tens or hundreds of wireless stations 110. The AP 105 and STA 1 support TWT based scheduling. That is, STA 1 is operating according to 802.11ax, has TWT abilities, and PM = 0. STAs 2 and 3, however, do not support the power saving techniques described herein. STA 2 operates according to 802.11ax but has PM = 1. STA 3 operates according to 802.11ac and PM = 1.

In one example, the power save techniques are enabled when PM = 0 and disabled when PM = 1. In other examples, the power modes may differ. When a STA enters power save mode (PM = 1), an 11ax STA uses broadcast TWT for PS trigger and the 11ac/legacy STA uses Qpower.

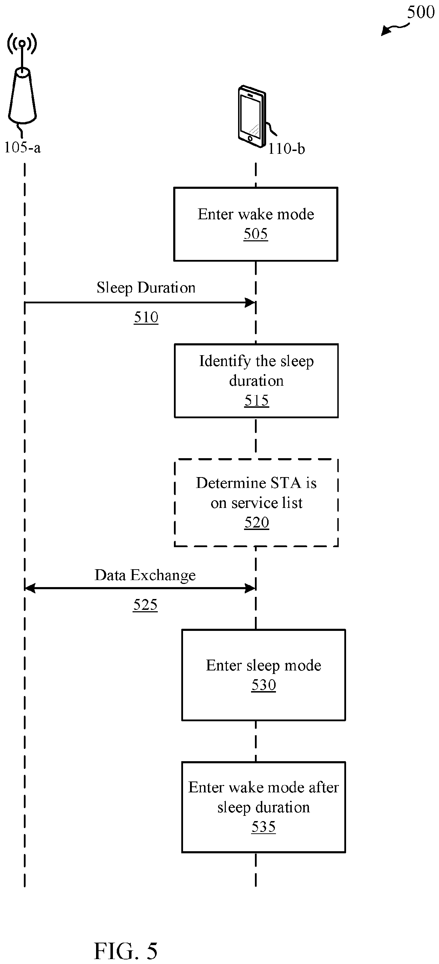

**FIG. 5** shows a process flow 500 that illustrate an example of a power save mechanism in accordance with various aspects of the present disclosure. The process flow 500 shows the power save mechanism in a WLAN of a wireless communications system including a wireless station 110-b and an AP 105-a. The wireless station 110-b and the AP 105-a are respective examples of the wireless station 110 and AP 105 of FIG. 1. In some examples, the STA power save mechanism 140 and/or the AP power save mechanism 145 of wireless station 110 and AP 105, respectively, may be configured to support one or more aspects of process flow 500.

At block 505, the wireless station 110-b enters the wake mode. In some examples, the wireless station 110-b enters the wake mode from a sleep mode. However, in other examples, the wireless station 110-b was previously awake or was in a wake/sleep mode. The wireless station 110-b may enter the wake mode at the beginning of a beacon interval.

The AP 105-a transmits a sleep duration message 510 to the wireless station 110-b. The sleep duration message 510 may be transmitted in a TWT setup request frame, an Action frame, or broadcasted in a beacon frame. If the AP 105-a transmits the sleep duration message 510 in the TWT setup request frame, the AP 105-a transmits a TWT signal frame at a beginning of a TWT slot, wherein the TWT signal frame comprises a service list that identifies at least one wireless station to be serviced during the TWT slot and the sleep duration.

From the sleep duration message 510, whether in a beacon frame, a TWT setup request frame, an Action frame, or other format, at block 515 the wireless station 110-b identifies the sleep duration from the sleep duration message 510. In some examples, at block 520, the wireless station 110-b determines whether it is on a service list if one was included with the sleep duration message 510.

In this example, the wireless station 110-b was on the service list and so remains awake until a data exchange 525 with the AP 105-a. In some examples, the wireless station 110-b enters a sleep mode until a first TWT time slot. At block 530, after the data exchange 525, the wireless station 110-b enters the sleep mode. At block 535, after the sleep duration expires, the wireless station 110-b wakes up.

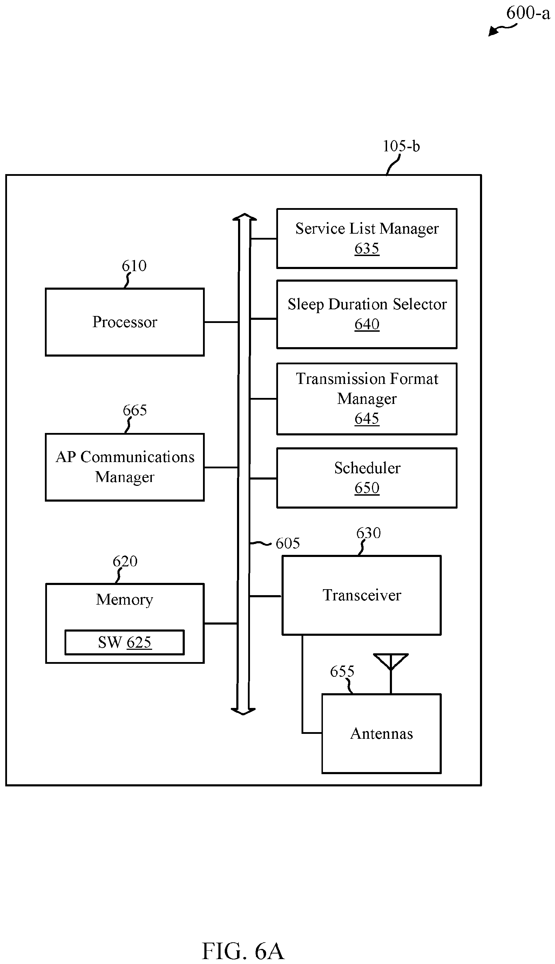

**FIG. 6A** shows a block diagram 600-a of an example AP 105-b that supports power saving features in a WLAN in accordance with various aspects of the present disclosure, and with respect to FIGs. 1-5. AP 105-b may provide a means for performing aspects of the described power saving features. The AP 105-b includes a processor 610, a memory 620, one or more transceivers 630, one or more antennas 655, and an AP communications manager 665. The AP 105-b also includes a service list manager 635, a sleep duration selector 640, a transmission format manager 645, and a scheduler 650. The processor 610, memory 620, transceiver(s) 630, AP communications manager 665, and service list manager 635, sleep duration selector 640, transmission format manager 645, and scheduler 650 are communicatively coupled with a bus 605, which enables communication between these components. The antenna(s) 655 are communicatively coupled with the transceiver(s) 630.

The processor 610 is an intelligent hardware device, such as a central processing unit (CPU), a microcontroller, an application-specific integrated circuit (ASIC), and the like. The processor 610 processes information received through the transceiver(s) 630 and information to be sent to the transceiver(s) 630 for transmission through the antenna(s) 655. The processor 610 may implement one or more aspects of a processing system for AP 105-b. In some examples, the processor 610 may include or act as an interface to exchange information with one or more components of AP 105-b.

The memory 620 is a computer-readable medium storing code, i.e. software (SW) code 715, containing instructions that, when executed, cause the processor 610 or another one of the components of the AP 105-b to perform various functions described herein, for example, determining a sleep duration, selecting a transmission format, creating a service list, scheduling transmission times, and transmitting the sleep duration.

The transceiver(s) 630 communicate bi-directionally with other wireless devices, such as APs 105, wireless stations 110, or other devices. The transceiver(s) 630 include a modem to modulate packets and frames and provide the modulated packets to the antenna(s) 655 for transmission. The modem is additionally used to demodulate packets received from the antenna(s) 635.

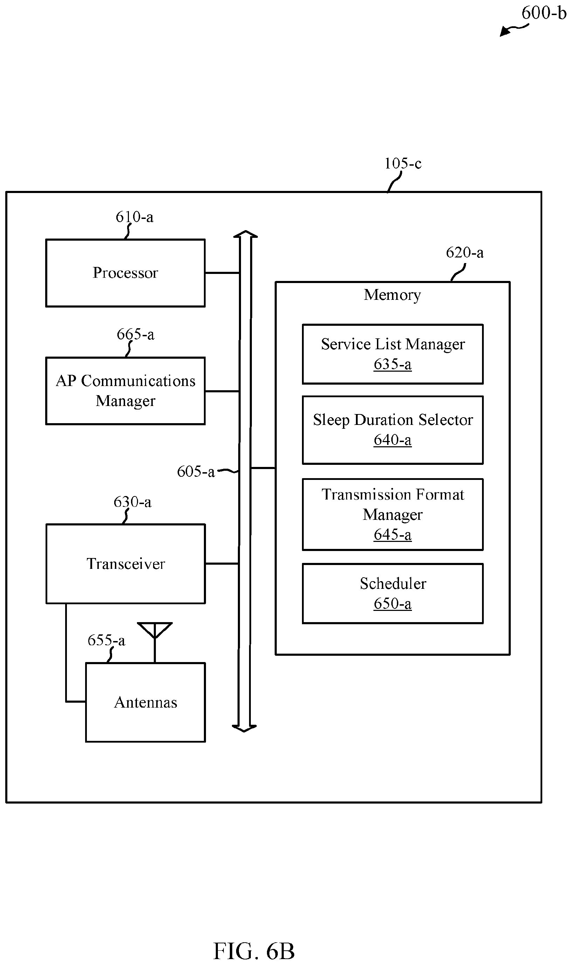

The AP communications manager 665 controls communications with stations and/or other devices, such as the devices illustrated in the WLAN 100 of FIG. 1. The AP communications manager 665 of FIG. 6 is in communication with the other components of the AP 105-b via the bus 605. Alternatively, functionality of the AP communications manager 665 may be implemented as a component of the transceiver 630, as a computer program product, and/or as at least one controller element of the processor 610.

The service list manager 635, sleep duration selector 640, transmission format manager 645, and scheduler 650 provide a means for and/or otherwise implement the features described with reference to FIGs. 1-5, as further explained below. In some examples, the service list manager 635, sleep duration selector 640, transmission format manager 645, and scheduler 650 perform the functions, and may be part of, the AP power save mechanism 145 of FIG. 1. In some examples, the service list manager 635, sleep duration selector 640, transmission format manager 645, and scheduler 650 perform the functions, and may be part of, a processing system for AP 105-b.

Again, FIG. 6A shows only one possible implementation of a device executing the features of FIGS. 1-5. While the components of FIG. 6A are shown as discrete hardware blocks (*e.g*., ASICs, field programmable gate arrays (FPGAs), semi-custom integrated circuits, *etc*.) for purposes of clarity, it will be understood that each of the components may also be implemented by multiple hardware blocks adapted to execute some or all of the applicable features in hardware. Alternatively, features of two or more of the components of FIG. 6A may be implemented by a single, consolidated hardware block. For example, a transceiver 630 chip may implement the processor 610, memory 620, service list manager 635, sleep duration selector 640, transmission format manager 645, and scheduler 650.

In still other examples, the features of each component may also be implemented, in whole or in part, with instructions embodied in a memory, formatted to be executed by one or more general or application-specific processors or as a processing system. For example, **FIG. 6B** shows a block diagram 600-b of another example of an AP 105-c in which the features of the service list manager 635, sleep duration selector 640, transmission format manager 645, and scheduler 650 are implemented as computer-readable code stored on memory 620-a and executed by one or more processors 610-a. Other combinations of hardware/software may be used to perform the features of one or more of the components of FIGS. 6A-6B.

The transceiver 630, antennas 655, bus 604, processor 610, memory 620, AP communications manager 665, sleep duration selector 640, and transmission format manager 645 of FIGS. 6A-6B may be means for providing an indication of a sleep duration for transmission to a wireless node.

The transceiver 630, antennas 655, bus 604, processor 610, memory 620, AP communications manager 665, sleep duration selector 640, and scheduler 650 of FIGS. 6A-6B may be means for communicating with the wireless node during a TWT, wherein the communication includes at least one of providing data for transmission to the wireless node or obtaining data received from the wireless node.

The transceiver 630, antennas 655, bus 604, processor 610, memory 620, AP communications manager 665, sleep duration selector 640, transmission format manager 645, and scheduler 650 of FIGS. 6A-6B may be means for refraining from providing data for transmission to the wireless node during at least the indicated sleep duration based at least in part on timing of the communication.

The processor 610, memory 620, AP communications manager 665, transmission format manager 645, and scheduler 650 may be means for generating a TWT setup request frame having the indication of sleep duration therein.

The transceiver 630, antennas 655, bus 604, processor 610, memory 620, AP communications manager 665, service list manager 635, sleep duration selector 640, and transmission format manager 645, and scheduler 650 of FIGS. 6A-6B may be means for providing the TWT setup request frame for transmission.

The processor 610, memory 620, AP communications manager 665, transmission format manager 645, and scheduler 650 may be means for generating a TWT signal during a time slot of the TWT.

The transceiver 630, antennas 655, bus 604, processor 610, memory 620, AP communications manager 665, service list manager 635, sleep duration selector 640, and transmission format manager 645, and scheduler 650 of FIGS. 6A-6B may be means for providing the TWT signal frame for transmission, wherein the TWT signal frame comprises a service list that identifies at least one wireless node to be serviced during at least one of the time slot of the TWT or the sleep duration.

The processor 610, memory 620, AP communications manager 665, transmission format manager 645, and scheduler 650 may be means for generating a beacon frame.

The transceiver 630, antennas 655, bus 604, processor 610, memory 620, AP communications manager 665, service list manager 635, sleep duration selector 640, and transmission format manager 645, and scheduler 650 of FIGS. 6A-6B may be means for providing the beacon frame for a broadcast transmission.

The transceiver 630, antennas 655, bus 604, processor 610, memory 620, AP communications manager 665, service list manager 635, sleep duration selector 640, and scheduler 650 of FIGS. 6A-6B may be means for determining a no service period for the wireless node based at least in part on a network congestion, wherein the indication of the sleep duration identifies the no service period, the no service period selected based at least in part on a network congestion.

The transceiver 630, antennas 655, bus 604, processor 610, memory 620, AP communications manager 665, service list manager 635, sleep duration selector 640, and scheduler of FIGS. 6A-6B may be means for selecting an allocation of the TWT allocation for a set of wireless nodes including the wireless node to align the no service period with the allocation of the TWT.

The transceiver 630, antennas 655, bus 604, processor 610, memory 620, AP communications manager 665, service list manager 635, sleep duration selector 640, and scheduler of FIGS. 6A-6B may be means for determining the sleep duration based at least in part on an aggregate throughput level associated with a number of wireless nodes including the wireless node.

The transceiver 630, antennas 655, bus 604, processor 610, memory 620, AP communications manager 665, service list manager 635, sleep duration selector 640, and scheduler of FIGS. 6A-6B may be means for updating the sleep duration based at least in part on an aggregate throughput level associated with a number of wireless nodes including the wireless node.

The transceiver 630, antennas 655, bus 604, processor 610, memory 620, AP communications manager 665, service list manager 635, sleep duration selector 640, and scheduler of FIGS. 6A-6B may be means for providing an indication of the updated sleep duration for transmission to the wireless node during a second TWT occurring temporally after the TWT.

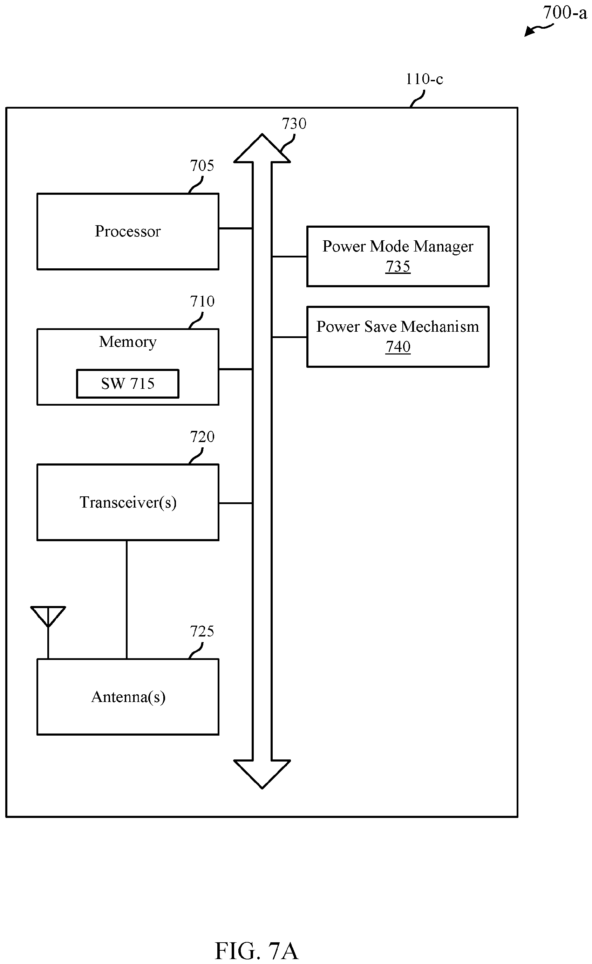

**FIG. 7A** shows a block diagram 700-a of an example wireless station 110-c that supports power save mechanisms in a WLAN in accordance with various aspects of the present disclosure, and with respect to FIGs. 1-5. Wireless station 110-c may provide a means for performing aspects of the described power saving features. The wireless station 110-c includes a processor 705, a memory 710, one or more transceivers 720, one or more antennas 725, a power mode manager 735, and a power save mechanism 740. The processor 705, memory 710, transceiver(s) 720, power mode manager 735, and power save mechanism 740 are communicatively coupled with a bus 730, which enables communication between these components. The antenna(s) 725 are communicatively coupled with the transceiver(s) 720.

The processor 705 is an intelligent hardware device, such as a CPU, a microcontroller, an ASIC, and the like. The processor 705 processes information received through the transceiver(s) 720 and information to be sent to the transceiver(s) 720 for transmission through the antenna(s) 725. The processor 705 may implement one or more aspects of a processing system for wireless station 110-c. In some examples, the processor 705 may include or act as an interface to exchange information with one or more components of wireless station 110-c.

The memory 710 is a computer-readable medium storing code, i.e. software (SW) code 715, containing instructions that, when executed, cause the processor 705 or another one of the components of the wireless station 110-c to perform various functions described herein, for example, entering sleep and wake modes, determining a sleep duration, and performing data exchanges with an AP 105.

The transceiver(s) 720 communicate bi-directionally with other wireless devices, such as APs 105, wireless stations 110, or other devices. The transceiver(s) 720 include a modem to modulate packets and frames and provide the modulated packets to the antenna(s) 725 for transmission. The modem is additionally used to demodulate packets received from the antenna(s) 725.

The power mode manager 735 and the power save mechanism 740 provide a means for and/or otherwise implement the features described with reference to FIGs. 1-5, as further explained below. In some examples, the power mode manager 735 and the power save mechanism 740 perform the functions, and may be part of, the STA power save mechanism 140 of FIG. 1. In some examples, the power mode manager 735 and the power save mechanism 740 perform the functions, and may be part of, a processing system for wireless station 110-c.

Again, FIG. 7A shows only one possible implementation of a device executing the features of FIGS. 1-6. While the components of FIG. 7A are shown as discrete hardware blocks (*e.g.,* ASICs, FPGAs, semi-custom integrated circuits, *etc*.) for purposes of clarity, it will be understood that each of the components may also be implemented by multiple hardware blocks adapted to execute some or all of the applicable features in hardware. Alternatively, features of two or more of the components of FIG. 7A may be implemented by a single, consolidated hardware block. For example, a transceiver 720 chip may implement the processor 705, memory 710, power mode manager 735, and power save mechanism 740.

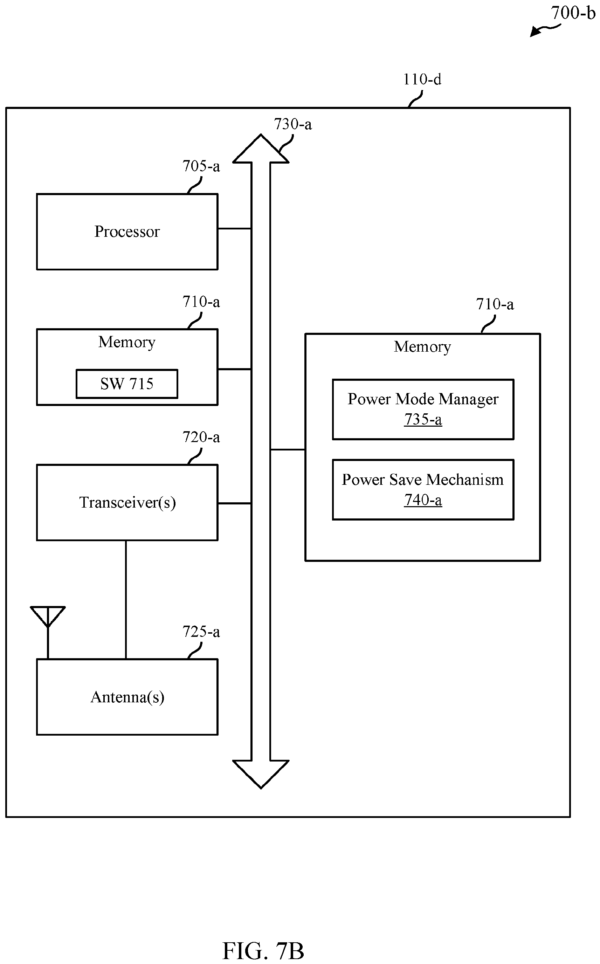

In still other examples, the features of each component may also be implemented, in whole or in part, with instructions embodied in a memory, formatted to be executed by one or more general or application-specific processors. For example, **FIG. 7B** shows a block diagram 700-b of another example of a wireless station 110-d in which the features of the power mode manager 735 and the power save mechanism 740 are implemented as computer-readable code stored on memory 710-a and executed by one or more processors 705-a. Other combinations of hardware/software may be used to perform the features of one or more of the components of FIGS. 7A-7B.

The transceiver 720, antennas 725, bus 730, processor 705, memory 710, power mode manager 735, and power save mechanism of FIGS. 7A-7B may be means for obtaining an indication of a sleep duration received from a wireless node.

The transceiver 720, antennas 725, bus 730, processor 705, memory 710, power mode manager 735, and power save mechanism of FIGS. 7A-7B may be means for communicating with the wireless node during a time slot of a target wakeup time (TWT), wherein the communication comprises at least one of obtaining data received from the wireless node or providing data for transmission to the wireless node.

The transceiver 720, antennas 725, bus 730, processor 705, memory 710, power mode manager 735, and power save mechanism of FIGS. 7A-7B may be means for entering a sleep mode for the indicated sleep duration based at least in part on timing of the communication with the wireless node during the time slot of the TWT.

The transceiver 720, antennas 725, bus 730, processor 705, memory 710, power mode manager 735, and power save mechanism of FIGS. 7A-7B may be means for obtaining a beacon frame received from the wireless node.

The transceiver 720, antennas 725, bus 730, processor 705, memory 710, power mode manager 735, and power save mechanism of FIGS. 7A-7B may be means for determining the sleep duration from the TWT setup request frame.

The transceiver 720, antennas 725, bus 730, processor 705, memory 710, power mode manager 735, and power save mechanism of FIGS. 7A-7B may be means for waking up from the sleep mode at a beginning of the time slot of the TWT.

The transceiver 720, antennas 725, bus 730, processor 705, memory 710, power mode manager 735, and power save mechanism of FIGS. 7A-7B may be means for obtaining a TWT signal frame received from the wireless node during the time slot of the TWT, the TWT signal frame comprising a service list that identifies which wireless nodes are to be serviced in at least one of the time slot of the TWT or the sleep duration.

The transceiver 720, antennas 725, bus 730, processor 705, memory 710, power mode manager 735, and power save mechanism of FIGS. 7A-7B may be means for means for determining that the service list does not include the wireless station 110-c, 110-d (*e.g.* an apparatus for wireless communications) for the time slot of the TWT.

The transceiver 720, antennas 725, bus 730, processor 705, memory 710, power mode manager 735, and power save mechanism of FIGS. 7A-7B may be means for entering, by the wireless station 110-c, 110-d, the sleep mode for the remainder of the time slot of the TWT.

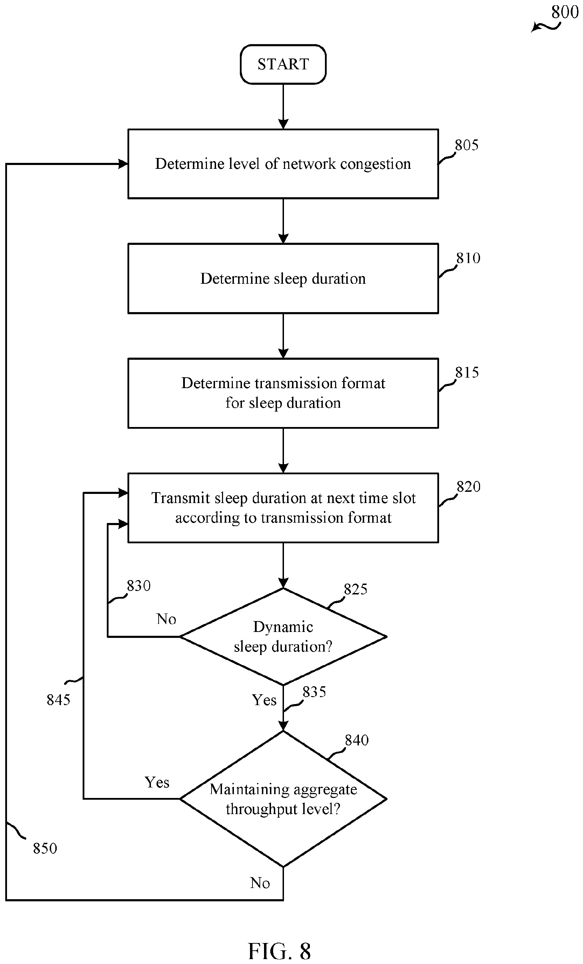

**FIG. 8** shows a flow chart that illustrates one example of a method 800 for wireless communication, in accordance with various aspects of the present disclosure. The method 800 may be performed by any of the APs 105 discussed in the present disclosure. The AP 105 may be serving a plurality of wireless stations 110. As previously discussed, the AP 105 may also be referred to as a wireless node in some examples.

Broadly speaking, the method 800 illustrates a procedure by which the AP 105 transmits an indication of a sleep duration to a wireless station, communicates with the wireless station during a TWT, and refrains from transmitting to the wireless station 110 for at least the indicated sleep duration based at least in part on timing of the data exchange.

At block 805, the AP 105 determines a level of network congestion. At block 810, the AP 105 determines a sleep duration. In some examples, the AP 105 determines the sleep duration based on the level of network congestion. The sleep duration may be less or greater than a beacon interval 205 time. For example, the sleep duration may be 80 milliseconds. In some examples, the AP 105 determines a no service period for the wireless station 110, wherein the indication of the sleep duration identifies the no service period. The AP 105 can determine the sleep duration to maintain an aggregate throughput level within a threshold throughput amount based on a number of connected wireless stations 110. In another example, the AP 105 determines a TWT allocation for a set of connected wireless stations 110 including the wireless station and aligns the no service period with the TWT allocation.

The AP 105 determines a format to transmit the sleep duration at block 815. In one example, the AP 105 incorporates the sleep duration into a TWT setup request frame. In one example, the AP 105 incorporates the sleep duration into a beacon frame. In other example, Action frames or other formats or frames may be used.

At block 820, the AP 105 transmits the sleep duration at the next time slot according to the selected transmission format. In some examples, the AP 105 transmits the indication of the sleep duration in a TWT setup request frame. Transmitting the indication of the sleep duration may further include transmitting a TWT signal frame 305 at a beginning of a TWT slot, wherein the TWT signal frame comprises a service list that identifies at least one wireless station to be serviced during the TWT slot and the sleep duration. In another example, the AP 105 broadcasting the indication of the sleep duration in a beacon frame or Action frame.

At block 825, the AP 105 determines whether the sleep duration is to be dynamic ( *e.g*., adjustable). If not, the method 800 proceeds along path 830 to transmit the sleep duration again at the next time slot. If so, the method 800 follows path 835 to block 840. At block 840, the AP 105 determines whether the WLAN is maintaining an aggregate throughput level. If so, the method 800 follows path 845 to block 820. If the WLAN is maintaining the aggregate throughput level, there may be no reason to adjust the sleep duration. However, if the WLAN is not maintaining the aggregate throughput level, the AP 105 can update the sleep duration in order to adjust the aggregate throughput level. The method 800 follows path 850 to block 805 to determine the level of network congestion, and then proceeds to determine the sleep duration anew at block 810. That is, the AP 105 updates the sleep duration and transmits an indication of the updated sleep duration to the wireless station during a next TWT slot. The method 800 may be repeated as long as needed.

Thus, the method 800 may provide for wireless communication. It should be noted that the method 800 is just one implementation and that the operations of the method 800 may be rearranged or otherwise modified such that other implementations are possible.

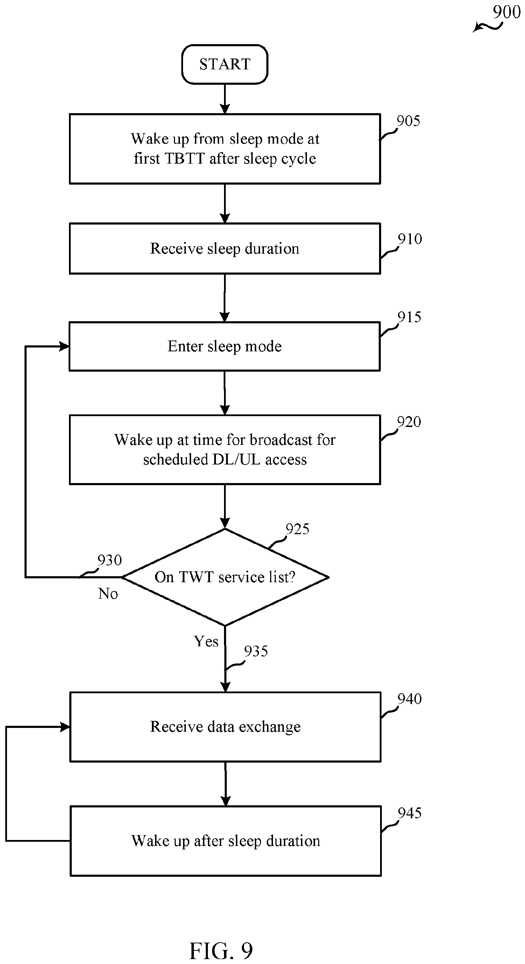

**FIG. 9** shows a flow chart that illustrates one example of a method 900 for wireless communication, in accordance with various aspects of the present disclosure. The method 900 may be performed by any of the wireless stations 110 discussed in the present disclosure. In some examples, the wireless station 110 may also be referred to as a wireless node. Broadly speaking, the method 900 illustrates a procedure by which the wireless station 110 receives an indication of a sleep duration from an AP 105, communicates with the AP 105 during a TWT slot, and enters a sleep mode for the indicated sleep duration based at least in part on a timing of the communication with the AP 105 during the TWT slot.

At block 905, the method 900 includes the wireless station 110 waking up from a sleep mode at a first TBTT after a sleep cycle. At block 910, the wireless station 110 receives a sleep duration. In some examples, receiving the sleep duration includes receiving a beacon frame from the AP 105. In other examples, receiving the sleep duration includes receiving a TWT setup request frame or Action frame. The wireless station 110 may determine the indication of the sleep duration from the beacon frame, the TWT setup request frame, or the Action frame. At block 915, the wireless station 110 can enter a sleep mode after determining the sleep duration and that the wireless station 110 is not currently being served by the AP 105.

At block 920, the wireless station 110 wakes up at a time for a broadcast for a scheduled DL/UL access. The wireless station 110 may receive a frame that includes a TWT service list. At block 925, the wireless station 110 determines whether it is on the TWT service list. If not, the method 900 follows path 930 to block 915 the wireless station 110 enters the sleep mode and returns to block 920.

However, if the wireless station 110 is on the TWT service list, the method 900 follows path 935 to block 940. At block 940, the wireless station 110 remains awake until it participates in a data exchange. After the data exchange, at block 945, the wireless station 110 goes to sleep and then wakes up after the sleep duration.

The method 900 shows an alternative for using the power saving mechanism 140 described herein. Thus, the method 900 may provide for wireless communication. It should be noted that the method 900 is just one implementation and that the operations of the method 900 may be rearranged or otherwise modified such that other implementations are possible.

In some examples, aspects from two or more of the methods 800 and 900 may be combined. It should be noted that the methods 800 and 900 are just example implementations, and that the operations of the methods 800 and 900 may be rearranged or otherwise modified such that other implementations are possible.

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

The detailed description set forth above in connection with the appended drawings describes examples and does not represent the only examples that may be implemented or that are within the scope of the claims. The terms "example" and "exemplary," when used in this description, mean "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and apparatuses are shown in block diagram form in order to avoid obscuring the concepts of the described examples.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a digital signal processor (DSP), an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, *e.g*., a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. As used herein, including in the claims, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination. Also, as used herein, including in the claims, "or" as used in a list of items (for example, a list of items prefaced by a phrase such as "at least one of' or "one or more of') indicates a disjunctive list such that, for example, a list of "at least one of A, B, or C" means A or B or C or AA or AB or AC or BC or ABC (*i.e*., A and B and C).

Computer-readable media includes both computer storage media and communication media including any medium that facilitates transfer of a computer program from one place to another. A storage medium may be any available medium that can be accessed by a general purpose or special purpose computer. By way of example, and not limitation, computer-readable media can comprise RAM, ROM, EEPROM, flash memory, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk and Blu-ray disc where disks usually reproduce data magnetically, while discs reproduce data optically with lasers. Combinations of the above are also included within the scope of computer-readable media. The computer-program product may comprise packaging materials to advertise the computer-readable medium therein for purchase by consumers.

The previous description of the disclosure is provided to enable a person skilled in the art to make or use the disclosure. Various modifications to the disclosure will be readily apparent to those skilled in the art, and the generic principles defined herein may be applied to other variations without departing from the scope of the disclosure. Thus, the disclosure is not to be limited to the examples and designs described herein but is to be accorded the broadest scope consistent with the principles and novel features disclosed herein.

## Claims

1. A method for wireless communication, comprising:
providing an indication of a sleep duration to a wireless node (110), wherein providing the indication of the sleep duration for transmission to the wireless node (110) further comprises:
generating a target wakeup time, TWT, signal frame (305) during a time slot of a TWT (210); and
providing the TWT signal frame (305) for transmission;
wherein the TWT signal frame (305) comprises a service list that identifies at least one wireless node to be serviced during at least one of the time slot of the TWT (210) or the sleep duration;
communicating with the wireless node during the TWT (210), wherein the communication comprises at least one of providing data for transmission to the wireless node (110) or obtaining data received from the wireless node (110); and
refraining from providing data for transmission to the wireless node (110) during at least the indicated sleep duration based at least in part on timing of the communication.

2. The method of claim 1, wherein providing the indication of the sleep duration for transmission to the wireless node (110) further comprises:
generating a TWT setup request frame having the indication of the sleep duration therein; and
providing the TWT setup request frame for transmission to the wireless node (110).

3. The method of claim 1, further comprising:
generating a beacon frame having the indication of the sleep duration in the beacon frame;
wherein providing the indication of the sleep duration for transmission to the wireless node (110) further comprises: providing the beacon frame for a broadcast transmission.

4. The method of claim 1, further comprising:
determining a no service period for the wireless node (110) based at least in part on network congestion, wherein the indication of the sleep duration identifies the no service period.

5. An apparatus for wireless communication, comprising:
means for providing an indication of a sleep duration for transmission to a wireless node (110), wherein the means for providing the indication of the sleep duration further comprises:
means for generating a target wakeup time, TWT, signal frame (305) during a time slot of a TWT (210), and
means for providing the TWT signal frame (305) for transmission;
wherein the TWT signal frame (305) comprises a service list that identifies at least one wireless node to be serviced during at least one of the time slot of the TWT (210) or the sleep duration;
means for communicating with the wireless node (110) during the TWT (210), wherein the communication comprises at least one of providing data for transmission to the wireless node (110) or obtaining data received from the wireless node (110); and
means for refraining from providing data for transmission to the wireless node (110) during at least the indicated sleep duration based at least in part on timing of the communication.

6. The apparatus of claim 5, wherein the means for providing the indication of the sleep duration further comprises:
means for generating a TWT setup request frame having the indication of the sleep duration therein; and
means for providing the TWT setup request frame for transmission.

7. The apparatus of claim 5, further comprising:
means for generating a beacon frame having the indication of the sleep duration in the beacon frame;
wherein the means for providing the indication of the sleep duration for transmission to the wireless node (110) further comprises:
means for providing the beacon frame for a broadcast transmission.

8. The apparatus of claim 7, further comprising:
means for determining a no service period for the wireless node (110) based at least in part on a network congestion, wherein the indication of the sleep duration identifies the no service period, the no service period selected based at least in part on the network congestion.

9. A method for wireless communication, comprising:
obtaining an indication of a sleep duration received from a wireless node (105), wherein obtaining the indication of the sleep duration received from the wireless node (105) further comprises:
obtaining, during a time slot of a target wakeup time, TWT, (210) a TWT signal frame (305) received from the wireless node (105) that includes a service list that identifies which wireless nodes are to be serviced in at least one of the time slot of the TWT (210) or the sleep duration;
communicating with the wireless node (105) during the time slot of the TWT (210), wherein the communication comprises at least one of obtaining data received from the wireless node (105) or providing data for transmission to the wireless node (105); and
entering a sleep mode for the indicated sleep duration based at least in part on timing of the communication with the wireless node (105) during the time slot of the TWT (210), wherein entering the sleep mode further comprises:
determining that the service list does not include the wireless node (105) for the time slot of the TWT; and
entering the sleep mode for a remainder of the time slot of the TWT (210).

10. The method of claim 9, wherein obtaining the indication of the sleep duration further comprises:
obtaining a beacon frame received from the wireless node (105); and
determining the indication of the sleep duration from the beacon frame.

11. The method of claim 9, wherein obtaining the indication of the sleep duration further comprises:
obtain a TWT setup request frame received from the wireless node (105); and
determining the sleep duration from the TWT setup request frame.

12. An apparatus for wireless communication, comprising:
means for obtaining an indication of a sleep duration received from a wireless node (105), wherein the means for obtaining the indication of the sleep duration received from the wireless node (105) further comprises:
means for obtaining a target wakeup time, TWT, signal frame (305) received from the wireless node (105) during a time slot of a TWT (210), the TWT signal frame (305) comprising a service list that identifies which wireless nodes are to be serviced in at least one of the time slot of the TWT (210) or the sleep duration;
means for communicating with the wireless node (105) during a time slot of the TWT (210), wherein the communication comprises at least one of obtaining data received from the wireless node (105) or providing data for transmission to the wireless node (105); and
means for entering a sleep mode for the indicated sleep duration based at least in part on timing of the communication with the wireless node (105) during the time slot of the TWT (210), wherein the means for entering the sleep mode received from the wireless node (105) further comprises:
means for determining that the service list does not include the apparatus for the time slot of the TWT (210); and
means for entering, by the apparatus, the sleep mode for a remainder of the time slot of the TWT.

13. The apparatus of claim 12, wherein the means for obtaining the indication of the sleep duration received from the wireless node (105) further comprises:
means for obtaining a beacon frame received from the wireless node (105); and
means for determining the indication of the sleep duration from the beacon frame.

14. The apparatus of claim 12, wherein the means for obtaining the indication of the sleep duration received from the wireless node (105) further comprises:
means for obtaining a TWT setup request frame received from the wireless node (105); and
means for determining the sleep duration from the TWT setup request frame.

15. A computer program comprising instructions to cause at least one computer to perform the steps according to any of claims 1-4 or 9-11.

## Patentansprüche

1. Verfahren für drahtlose Kommunikation, umfassend:
Bereitstellen einer Anzeige einer Schlafdauer für einen drahtlosen Knoten (110), wobei das Bereitstellen der Anzeige der Schlafdauer für eine Übertragung an den drahtlosen Knoten (110) ferner umfasst:
Erzeugen eines Zielaufwachzeit-, TWT, Signalrahmens (305) während eines Zeitschlitzes einer TWT (210); und
Bereitstellen des TWT-Signalrahmens (305) zur Übertragung;
wobei der TWT-Signalrahmen (305) eine Dienstliste umfasst, die zumindest einen drahtlosen Knoten identifiziert, der zumindest während einem von dem Zeitschlitz der TWT (210) oder der Schlafdauer bedient werden soll;
Kommunizieren mit dem drahtlosen Knoten während der TWT (210), wobei die Kommunikation zumindest eines von Bereitstellen von Daten zur Übertragung an den drahtlosen Knoten (110) oder Erhalten von Daten, die von dem drahtlosen Knoten (110) empfangen werden, umfasst; und
Unterlassen von Bereitstellen von Daten zur Übertragung an den drahtlosen Knoten (110) während zumindest der angegebenen Schlafdauer basierend zumindest teilweise auf einem Timing der Kommunikation.

2. Verfahren nach Anspruch 1, wobei Bereitstellen der Anzeige der Schlafdauer zur Übertragung an den drahtlosen Knoten (110) ferner umfasst:
Erzeugen eines TWT-Setup-Anforderungsrahmens, der die Anzeige der Schlafdauer enthält; und
Bereitstellen des TWT-Setup-Anforderungsrahmens zur Übertragung an den drahtlosen Knoten (110).

3. Verfahren nach Anspruch 1, ferner umfassend:
Erzeugen eines Beacon-Rahmens, der die Anzeige der Schlafdauer in dem Beacon-Rahmen hat;
wobei Bereitstellen der Anzeige der Schlafdauer zur Übertragung an den drahtlosen Knoten (110) ferner umfasst: Bereitstellen des Beacon-Rahmens für eine Broadcast-Übertragung.

4. Verfahren nach Anspruch 1, ferner umfassend:
Bestimmen einer Nicht-Bedien-Dauer für den drahtlosen Knoten (110), basierend zumindest teilweise auf einem Netzwerkstau, wobei die Anzeige der Schlafdauer die Nicht-Bedien-Dauer identifiziert.

5. Vorrichtung für drahtlose Kommunikation, umfassend:
Mittel zum Bereitstellen einer Anzeige einer Schlafdauer zur Übertragung an einen drahtlosen Knoten (110), wobei das Mittel zum Bereitstellen der Anzeige der Schlafdauer ferner umfasst:
Mittel zum Erzeugen eines Zielaufwachzeit-, TWT, Signalrahmens (305) während eines Zeitschlitzes einer TWT (210); und
Mittel zum Bereitstellen des TWT-Signalrahmens (305) zur Übertragung;
wobei der TWT-Signalrahmen (305) eine Dienstliste umfasst, die zumindest einen drahtlosen Knoten identifiziert, der zumindest während einem von dem Zeitschlitz der TWT (210) oder der Schlafdauer bedient werden soll;
Mittel zum Kommunizieren mit dem drahtlosen Knoten (110) während der TWT (210), wobei die Kommunikation zumindest eines von Bereitstellen von Daten zur Übertragung an den drahtlosen Knoten (110) oder Erhalten von Daten, die von dem drahtlosen Knoten (110) empfangen werden, umfasst; und
Mittel zum Unterlassen von Bereitstellen von Daten zur Übertragung an den drahtlosen Knoten (110) während zumindest der angegebenen Schlafdauer basierend zumindest teilweise auf einem Timing der Kommunikation.

6. Vorrichtung nach Anspruch 5, wobei das Mittel zum Bereitstellen der Anzeige der Schlafdauer, ferner umfasst:
Mittel zum Erzeugen eines TWT-Setup-Anforderungsrahmens, der die Anzeige der Schlafdauer enthält; und
Mittel zum Bereitstellen des TWT-Setup-Anforderungsrahmens zur Übertragung.

7. Vorrichtung nach Anspruch 5, ferner umfassend:
Mittel zum Erzeugen eines Beacon-Rahmens, der die Anzeige der Schlafdauer in dem Beacon-Rahmen hat;
wobei das Mittel zum Bereitstellen der Anzeige der Schlafdauer zur Übertragung an den drahtlosen Knoten (110) ferner umfasst:
Mittel zum Bereitstellen des Beacon-Rahmens für eine Broadcast-Übertragung.

8. Vorrichtung nach Anspruch 7, ferner umfassend:
Mittel zum Bestimmen einer Nicht-Bedien-Dauer für den drahtlosen Knoten (110), basierend zumindest teilweise auf einem Netzwerkstau, wobei die Anzeige der Schlafdauer die Nicht-Bedien-Dauer identifiziert, wobei die Nicht-Bedien-Dauer basierend zumindest teilweise auf dem Netzwerkstau ausgewählt wird.

9. Verfahren zur drahtlosen Kommunikation, umfassend:
Erhalten einer Anzeige einer Schlafdauer, die von einem drahtlosen Knoten (105) empfangen wird, wobei Erhalten der Anzeige der Schlafdauer, die von dem drahtlosen Knoten (105) empfangen wird, ferner umfasst:
Erhalten, während eines Zeitschlitzes einer Zielaufwachzeit, TWT, (210) eines TWT-Signalrahmens (305), der von dem drahtlosen Knoten (105) empfangen wird, der eine Dienstliste enthält, die identifiziert, welche drahtlosen Knoten in zumindest einem von dem Zeitschlitz der TWT (210) oder der Schlafdauer bedient werden sollen;
Kommunizieren mit dem drahtlosen Knoten (105) während des Zeitschlitzes der TWT (210), wobei die Kommunikation zumindest eines von Erhalten von Daten, die von dem drahtlosen Knoten (105) empfangen werden oder Bereitstellen von Daten zur Übertragung an den drahtlosen Knoten (105) umfasst; und
Eintreten in einen Schlafmodus für die angezeigte Schlafdauer basierend zumindest teilweise auf einem Timing der Kommunikation mit dem drahtlosen Knoten (105) während des Zeitschlitzes der TWT (210), wobei Eintreten in den Schlafmodus ferner umfasst:
Bestimmen, dass die Dienstliste den drahtlosen Knoten (105) für den Zeitschlitz der TWT nicht enthält; und
Eintreten in den Schlafmodus für einen Rest des Zeitschlitzes der TWT (210).

10. Verfahren nach Anspruch 9, wobei Erhalten der Anzeige der Schlafdauer ferner umfasst:
Erhalten eines Beacon-Rahmens, der von dem drahtlosen Knoten (105) empfangen wird; und
Bestimmen der Anzeige der Schlafdauer aus dem Beacon-Rahmen.

11. Verfahren nach Anspruch 9, wobei Erhalten der Anzeige der Schlafdauer ferner umfasst:
Erhalten eines TWT-Setup-Anforderungsrahmens, der von dem drahtlosen Knoten (105) empfangen wird; und
Bestimmen der Schlafdauer aus dem TWT-Setup-Anforderungsrahmen.

12. Vorrichtung für drahtlose Kommunikation, umfassend:
Mittel zum Erhalten einer Anzeige einer Schlafdauer, die von einem drahtlosen Knoten (105) empfangen wird, wobei das Mittel zum Erhalten der Anzeige der Schlafdauer, die von dem drahtlosen Knoten (105) empfangen wird, ferner umfasst:
Mittel zum Erhalten eines Zielaufwachzeit-, TWT, Signalrahmens (305), der von dem drahtlosen Knoten (105) während eines Zeitschlitzes einer TWT (210) empfangen wird, wobei der TWT Signalrahmen (305) eine Dienstliste enthält, die identifiziert, welche drahtlose Knoten in zumindest einem von dem Zeitschlitz der TWT (210) oder der Schlafdauer bedient werden sollen;
Mittel zum Kommunizieren mit dem drahtlosen Knoten (105) während eines Zeitschlitzes der TWT (210), wobei die Kommunikation zumindest eines von Erhalten von Daten, die von dem drahtlosen Knoten (105) empfangen werden oder Bereitstellen von Daten zur Übertragung an den drahtlosen Knoten (105) umfasst; und
Mittel zum Eintreten in einen Schlafmodus für die angezeigte Schlafdauer basierend zumindest teilweise auf einem Timing der Kommunikation mit dem drahtlosen Knoten (105) während des Zeitschlitzes der TWT (210), wobei das Mittel zum Eintreten in den Schlafmodus, der von dem drahtlosen Knoten (105) empfangen wird, ferner umfasst:
Mittel zum Bestimmen, dass die Dienstliste die Vorrichtung für den Zeitschlitz der TWT (210) nicht enthält; und
Mittel zum Eintreten, durch die Vorrichtung, in den Schlafmodus für einen Rest des Zeitschlitzes der TWT.

13. Vorrichtung nach Anspruch 12, wobei das Mittel zum Erhalten der Anzeige der Schlafdauer, die von dem drahtlosen Knoten (105) empfangen wird, ferner umfasst:
Mittel zum Erhalten eines Beacon-Rahmens, der von dem drahtlosen Knoten (105) empfangen wird; und
Mittel zum Bestimmen der Anzeige der Schlafdauer aus dem-Beacon Rahmen.

14. Vorrichtung nach Anspruch 12, wobei das Mittel zum Erhalten der Anzeige der Schlafdauer, die von dem drahtlosen Knoten (105) empfangen wird, ferner umfasst:
Mittel zum Erhalten eines TWT-Setup-Anforderungsrahmens, der von dem drahtlosen Knoten (105) empfangen wird; und
Mittel zum Bestimmen der Schlafdauer aus dem TWT-Setup-Anforderungsrahmen.

15. Computerprogramm, aufweisend Instruktionen, um zumindest einen Computer zu veranlassen, die Schritte gemäß einem der Ansprüche 1-4 oder 9-11 auszuführen.

## Revendications

1. Procédé pour une communication sans fil, comprenant :
la fourniture d'une indication d'une durée de sommeil à un noeud sans fil (110), dans lequel la fourniture de l'indication de la durée de sommeil pour la transmission au noeud sans fil (110) comprend en outre :
la génération d'une trame de signal de temps de réveil cible, TWT, (305) pendant un créneau temporel d'un TWT (210) ; et
la fourniture de la trame de signal TWT (305) pour la transmission ;
dans lequel la trame de signal TWT (305) comprend une liste de service qui identifie au moins un noeud sans fil devant être desservi pendant au moins l'un du créneau temporel du TWT (210) ou de la durée de sommeil ;
la communication avec le noeud sans fil pendant le TWT (210), dans lequel la communication comprend au moins l'une de la fourniture de données pour la transmission au noeud sans fil (110) ou de l'obtention de données reçues à partir du noeud sans fil (110) ; et
le fait de s'abstenir de fournir des données pour la transmission au noeud sans fil (110) pendant au moins la durée de sommeil indiquée sur la base au moins en partie du positionnement temporel de la communication.

2. Procédé selon la revendication 1, dans lequel la fourniture de l'indication de la durée de sommeil pour la transmission au noeud sans fil (110) comprend en outre :
la génération d'une trame de demande d'établissement de TWT ayant l'indication de la durée de sommeil à l'intérieur ; et
la fourniture de la trame de demande d'établissement de TWT pour la transmission au noeud sans fil (110).

3. Procédé selon la revendication 1, comprenant en outre :
la génération d'une trame de balise ayant l'indication de la durée de sommeil dans la trame de balise ;
dans lequel la fourniture de l'indication de la durée de sommeil pour la transmission au noeud sans fil (110) comprend en outre : la fourniture de la trame de balise pour une transmission de diffusion.

4. Procédé selon la revendication 1, comprenant en outre : la détermination d'une période sans service pour le noeud sans fil (110) sur la base au moins en partie d'un encombrement du réseau, dans lequel l'indication de la durée de sommeil identifie la période sans service.

5. Appareil pour une communication sans fil, comprenant : des moyens pour fournir une indication d'une durée de sommeil pour la transmission à un noeud sans fil (110), dans lequel les moyens pour fournir l'indication de la durée de sommeil comprennent en outre :
des moyens pour générer une trame de signal de temps de réveil cible, TWT, (305) pendant un créneau temporel d'un TWT (210) ; et
des moyens pour fournir la trame de signal TWT (305) pour la transmission ;
dans lequel la trame de signal TWT (305) comprend une liste de service qui identifie au moins un noeud sans fil devant être desservi pendant au moins l'un du créneau temporel du TWT (210) ou de la durée de sommeil ;
des moyens pour communiquer avec le noeud sans fil (110) pendant le TWT (210), dans lequel la communication comprend au moins l'une de la fourniture de données pour la transmission au noeud sans fil (110) ou de l'obtention de données reçues à partir du noeud sans fil (110) ; et
des moyens pour s'abstenir de fournir des données pour la transmission au noeud sans fil (110) pendant au moins la durée de sommeil indiquée sur la base au moins en partie du positionnement temporel de la communication.

6. Appareil selon la revendication 5, dans lequel les moyens pour fournir l'indication de la durée de sommeil comprennent en outre :
des moyens pour générer une trame de demande d'établissement de TWT ayant l'indication de la durée de sommeil à l'intérieur ; et
des moyens pour fournir la trame de demande d'établissement de TWT pour la transmission.

7. Appareil selon la revendication 5, comprenant en outre :
des moyens pour générer une trame de balise ayant l'indication de la durée de sommeil dans la trame de balise ;
dans lequel les moyens pour fournir l'indication de la durée de sommeil pour la transmission au noeud sans fil (110) comprennent en outre :
des moyens pour fournir la trame de balise pour une transmission de diffusion.

8. Appareil selon la revendication 7, comprenant en outre :
des moyens pour déterminer une période sans service pour le noeud sans fil (110) sur la base au moins en partie d'un encombrement du réseau, dans lequel l'indication de la durée de sommeil identifie la période sans service, la période sans service étant sélectionnée sur la base au moins en partie de l'encombrement du réseau.

9. Procédé pour une communication sans fil, comprenant : l'obtention d'une indication d'une durée de sommeil reçue à partir d'un noeud sans fil (105), dans lequel l'obtention de l'indication de la durée de sommeil reçue à partir du noeud sans fil (105) comprend en outre :
l'obtention, pendant un créneau temporel d'un temps de réveil cible, TWT, (210) d'une trame de signal TWT (305) reçue à partir du noeud sans fil (105) qui inclut une liste de service qui identifie quels noeuds sans fil doivent être desservis dans au moins l'un du créneau temporel du TWT (210) ou de la durée de sommeil ;
la communication avec le noeud sans fil (105) pendant le créneau temporel du TWT (210), dans lequel la communication comprend au moins l'une de l'obtention de données reçues à partir du noeud sans fil (105) ou de la fourniture de données pour la transmission au noeud sans fil (105) ; et
l'entrée dans un mode sommeil pour la durée de sommeil indiquée sur la base au moins en partie du positionnement temporel de la communication avec le noeud sans fil (105) pendant le créneau temporel du TWT (210), dans lequel l'entrée dans le mode sommeil comprend en outre :
la détermination que la liste de service n'inclut pas le noeud sans fil (105) pour le créneau temporel du TWT ; et l'entrée dans le mode sommeil pour un restant du créneau temporel du TWT (210).

10. Procédé selon la revendication 9, dans lequel l'obtention de l'indication de la durée de sommeil comprend en outre :
l'obtention d'une trame de balise reçue à partir du noeud sans fil (105) ; et
la détermination de l'indication de la durée de sommeil à partir de la trame de balise.

11. Procédé selon la revendication 9, dans lequel l'obtention de l'indication de la durée de sommeil comprend en outre :
l'obtention d'une trame de demande d'établissement de TWT reçue à partir du noeud sans fil (105) ; et
la détermination de la durée de sommeil à partir de la trame de demande d'établissement de TWT.

12. Appareil pour une communication sans fil, comprenant : des moyens pour obtenir une indication d'une durée de sommeil reçue à partir d'un noeud sans fil (105), dans lequel les moyens pour obtenir l'indication de la durée de sommeil reçue à partir du noeud sans fil (105) comprennent en outre :
des moyens pour obtenir une trame de signal de temps de réveil cible, TWT, (305) reçue à partir du noeud sans fil (105) pendant un créneau temporel d'un TWT (210), la trame de signal TWT (305) comprenant une liste de service qui identifie quels noeuds sans fil doivent être desservis dans au moins l'un du créneau temporel du TWT (210) ou de la durée de sommeil ;
des moyens pour communiquer avec le noeud sans fil (105) pendant un créneau temporel du TWT (210), dans lequel la communication comprend au moins l'une de l'obtention de données reçues à partir du noeud sans fil (105) ou de la fourniture de données pour la transmission au noeud sans fil (105) ; et
des moyens pour entrer dans un mode sommeil pour la durée de sommeil indiquée sur la base au moins en partie du positionnement temporel de la communication avec le noeud sans fil (105) pendant le créneau temporel du TWT (210), dans lequel les moyens pour entrer dans le mode sommeil reçu à partir du noeud sans fil (105) comprennent en outre : des moyens pour déterminer que la liste de service n'inclut pas l'appareil pour le créneau temporel du TWT (210) ; et des moyens pour entrer, par l'appareil, dans le mode sommeil pour un restant du créneau temporel du TWT.

13. Appareil selon la revendication 12, dans lequel les moyens pour obtenir l'indication de la durée de sommeil reçue à partir du noeud sans fil (105) comprennent en outre :
des moyens pour obtenir une trame de balise reçue à partir du noeud sans fil (105) ; et
des moyens pour déterminer l'indication de la durée de sommeil à partir de la trame de balise.

14. Appareil selon la revendication 12, dans lequel les moyens pour obtenir l'indication de la durée de sommeil reçue à partir du noeud sans fil (105) comprennent en outre :
des moyens pour obtenir une trame de demande d'établissement de TWT reçue à partir du noeud sans fil (105) ; et
des moyens pour déterminer la durée de sommeil à partir de la trame de demande d'établissement de TWT.

15. Programme informatique comprenant des instructions pour amener au moins un ordinateur à effectuer les étapes selon l'une quelconque des revendications 1 à 4 ou 9 à 11.
